# EUROPEAN PATENT APPLICATION

(11) **EP 4 650 586 A1**
(43) Date of publication of application: **19.11.2025**
(21) Application number: 25175551.8
(22) Date of filing: 09.05.2025
(51) Int. Cl.: F02D 19/02, F02D 19/06, F02D 41/00, F02D 41/14, F02B 43/10, F02M 21/02, F02P 5/04

(54) **ENGINE DEVICE**

(30) Priority: 14.05.2024 JP 2024078586
(71) Applicant: Yanmar Holdings Co., Ltd., Osaka-shi, Osaka (JP)
(72) Inventor: MATSUKI, Kazuya, Osaka (JP); KODA, Kazuyuki, Osaka (JP); TAKEMOTO, Toru, Osaka (JP); HONDA, Yusuke, Osaka (JP)
(74) Representative: Sekiguchi, Kazuya

(57) **Abstract**

[ABSTRACT]

[Problem] Provided is an engine device capable of reducing the amount of nitrogen oxide emissions to a target value regardless of the hydrogen mixing ratio in fuel gas, without the need for expensive sensors.

[Solution] An engine device 1 that is driven by hydrogen-mixed fuel gas includes: an engine 2; and a control unit 8 that controls, based on an excess air ratio of an air-fuel mixture of air and the fuel gas supplied to the engine 2, and an exhaust temperature of exhaust gas from the engine 2, the excess air ratio and/or an ignition parameter of the engine 2 in such a manner that nitrogen oxides in the exhaust gas are reduced.

## Description

### TECHNICAL FIELD

The present invention relates to an engine device that is driven by feeding hydrogen-mixed fuel gas into an engine.

### BACKGROUND ART

Some conventional engine devices are driven by feeding fuel gas having a time-varying fuel composition into an engine, and the fuel gas is mixed with air and supplied to the engine as an air-fuel mixture. In such engine devices, combustion of the fuel gas generates exhaust gas containing nitrogen oxides (NOx). The engine devices are required to reduce the amount of nitrogen oxide emissions to meet emission regulations and maintain stable operation regardless of variations in the fuel composition of the fuel gas being fed to the engine.

For example, Patent Document 1 discloses an engine control method involving using fuel that is composed of a plurality of different components and in which the concentration of each component varies over time. This control method includes controlling a first controlled variable that can adjust the air-fuel ratio so that the air-fuel ratio is in a strip region including a theoretical air-fuel ratio, detecting a second controlled variable that determines the air flow rate or the air-fuel mixture flow rate, and performing constant air-fuel ratio control so that the air-fuel ratio is maintained at the theoretical air-fuel ratio. In this method, the first controlled variable is the degree of opening of a fuel control valve for controlling the flow rate of the fuel to be supplied to a mixer, and the second controlled variable is the degree of opening of a throttle valve.

### PRIOR ART DOCUMENT

### PATENT DOCUMENT

Patent Document 1: Japanese Patent No. 5667413

### SUMMARY OF INVENTION

### TECHNICAL PROBLEM

Some engine devices that are driven by feeding fuel gas having a time-varying fuel composition into an engine employ, as the fuel gas, hydrogen-mixed fuel gas such as natural gas supplied from a pipeline. However, constant air-fuel ratio control using a conventional technology, such as that disclosed in Patent Document 1, can respond to variations in fuel composition in the case of an engine that is supplied with hydrocarbon-based fuel gas, but cannot respond to variations in hydrogen mixing ratio in the case of an engine that is supplied with hydrogen-mixed fuel gas, due to an increase in the amount of nitrogen oxide (NOx) emissions as well as a decrease in fuel efficiency.

In the case of an engine that is supplied with hydrogen-mixed fuel gas, combustion characteristics change significantly depending on the hydrogen mixing ratio. It is therefore necessary to track the hydrogen mixing ratio, and control fuel supply and engine operating conditions accordingly. In this case, however, it is necessary to add expensive sensors such as a hydrogen sensor and an NOx sensor to track the hydrogen mixing ratio, which can increase costs and make the device complex.

An object of the present invention is to provide an engine device capable of reducing the amount of nitrogen oxide emissions to a target value regardless of the hydrogen mixing ratio in fuel gas, without the need for expensive sensors.

### SOLUTION TO PROBLEM

In order to solve the problems described above, the present invention provides an engine device that is driven by feeding fuel gas having a time-varying fuel composition into an engine, the engine device including a control unit that controls, based on feed pressure of an air-fuel mixture of air and the fuel gas fed to the engine, and an exhaust temperature of exhaust gas from the engine, the feed pressure and/or an ignition parameter of the engine.

### ADVANTAGEOUS EFFECTS OF INVENTION

The present invention provides an engine device capable of operating in such a manner that the amount of nitrogen oxide emissions is reduced to a target value regardless of the hydrogen mixing ratio in fuel gas, without the need for expensive sensors.

### BRIEF DESCRIPTION OF DRAWINGS

FIG. 1 is a schematic diagram illustrating an example of an engine device according to an embodiment of the present invention.
FIG. 2 is a schematic diagram illustrating another example of the engine device according to the embodiment of the present invention.
FIG. 3 is a graph showing relationships between the average pressure and the amount of nitrogen oxide emissions of an engine in the engine device.
FIG. 4 is a graph showing relationships between the ignition timing and the excess air ratio of the engine in a case where the amount of nitrogen oxide emissions is adjusted in such a manner that a predetermined target value is achieved in the engine device.
FIG. 5 is a graph showing relationships between the ignition timing and the exhaust temperature of the engine in a case where the amount of nitrogen oxide emissions is adjusted in such a manner that the predetermined target value is achieved in the engine device.
FIG. 6 is a graph showing relationships between the excess air ratio and the exhaust temperature of the engine in a case where the amount of nitrogen oxide emissions is adjusted in such a manner that the predetermined target value is achieved in the engine device according to the embodiment of the present invention.
FIG. 7 is a flowchart showing an example of actions in combustion control that is performed by a control unit in the engine device according to the embodiment of the present invention.

### DESCRIPTION OF EMBODIMENTS

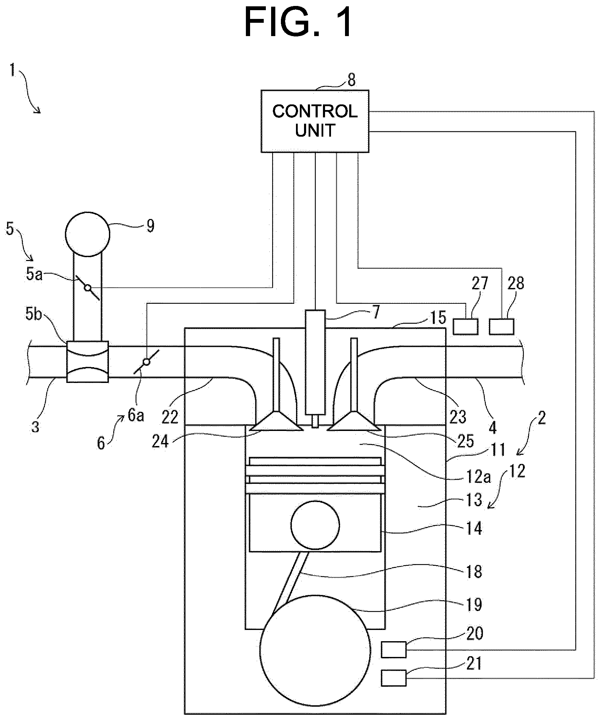

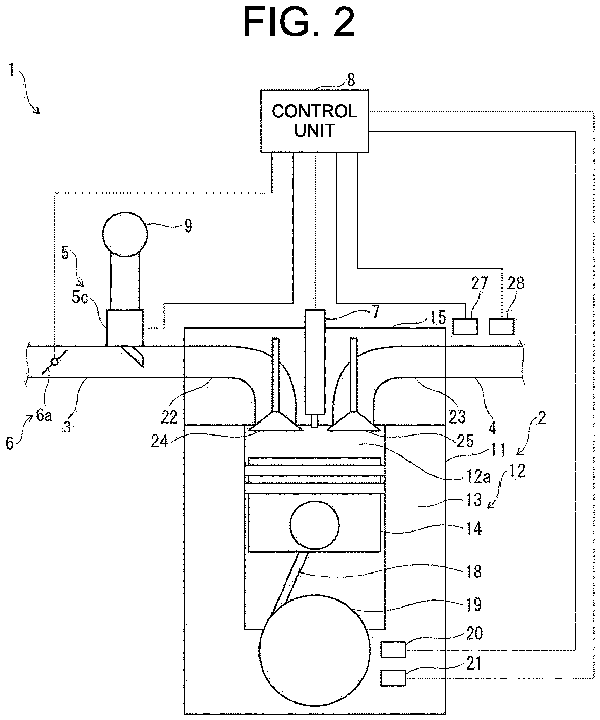

The following describes an engine device 1 according to an embodiment of the present invention with reference to the accompanying drawings. As shown in FIGS. 1 and 2, the engine device 1 includes an engine 2, an intake passage 3, an exhaust passage 4, a fuel supply device 5, an excess air ratio adjustment device 6, an ignition device 7, and a control unit 8.

In the present embodiment, in particular, the engine device 1 is a gas engine that is driven by feeding hydrogen-mixed fuel gas, such as natural gas supplied from a pipeline, into a combustion chamber 12a of the engine 2 as fuel gas having a time-varying fuel composition. For example, the engine device 1 supplies, to the engine 2 using the fuel supply device 5, fuel gas that contains hydrocarbon-based fuel such as diesel oil, kerosene, or heavy oil as a main component, and/or contains non-hydrocarbon-based fuel such as ammonia, and that is further mixed with hydrogen. The fuel gas is mixed with air and supplied to the combustion chamber 12a as an air-fuel mixture.

The engine 2 is, for example, a four-stroke engine and includes a plurality of cylinders 12 in a cylinder block 11, although FIGS. 1 and 2 show only one cylinder 12. Each cylinder 12 includes a cylinder body 13, a piston 14, and a cylinder head 15 as shown in FIGS. 1 and 2, and an ignition device 7 is provided for each cylinder 12.

The cylinder body 13 has, for example, a cylindrical shape and is located in the cylinder block 11. The piston 14 is slidably housed in the cylinder body 13. The cylinder head 15 is attached to an upper side of the cylinder body 13, and the cylinder body 13 and the cylinder head 15 form the combustion chamber 12a inside thereof.

At a lower part of the cylinder body 13, a crankshaft 19 is connected to the piston 14 with a connecting rod 18 therebetween, and reciprocating motion of the piston 14 is converted into rotational motion of the crankshaft 19 through the connecting rod 18.

The cylinder body 13 has a rotational speed sensor 20 such as an encoder provided for detecting the rotational speed of the crankshaft 19, which in other words is the rotational speed of the engine 2. The rotational speed sensor 20 transmits the detection result to the control unit 8. The cylinder body 13 also has a torque sensor 21 provided in the vicinity of the crankshaft 19 for detecting the engine load (engine torque) of the engine 2. The torque sensor 21 transmits the detection result to the control unit 8.

The cylinder head 15 has an intake port 22 and an exhaust port 23 in communication with the combustion chamber 12a in the cylinder body 13, and includes an intake valve 24 and an exhaust valve 25 that respectively open and close the intake port 22 and the exhaust port 23 with respect to the combustion chamber 12a.

The intake port 22 is connected to the intake passage 3 and introduces the air-fuel mixture supplied from the intake passage 3 into the combustion chamber 12a. The exhaust port 23 is connected to the exhaust passage 4 and discharges exhaust gas produced in the combustion chamber 12a into the exhaust passage 4. Opening the intake valve 24 allows the air-fuel mixture to be taken into the combustion chamber 12a through the intake port 22. Opening the exhaust valve 25 allows the exhaust gas produced in the combustion chamber 12a to be discharged through the exhaust port 23.

In other words, the intake passage 3 is connected to the intake port 22 of each cylinder 12 of the engine 2, and supplies compressed and cooled air to each cylinder 12 via the intake port 22. The exhaust passage 4 is connected to the exhaust port 23 of each cylinder 12 of the engine 2, and discharges the exhaust gas produced in each cylinder 12 via the exhaust port 23.

FIGS. 1 and 2 show an example in which the intake passage 3 and the intake port 22 are directly connected. However, in order to connect the intake passage 3 to the intake ports 22 of the plurality of cylinders 12, an intake manifold having branch flow paths that split from the intake passage 3 to the plurality of cylinders 12 may be provided between the intake passage 3 and the engine 2. FIGS. 1 and 2 show an example in which the exhaust passage 4 and the exhaust port 23 are directly connected. However, in a configuration in which the exhaust passage 4 is connected to the exhaust ports 23 of the plurality of cylinders 12, an exhaust manifold having branch flow paths that split from the exhaust passage 4 to the plurality of cylinders 12 may be provided between the exhaust passage 4 and the engine 2.

The intake passage 3 may be provided with an air filter (not shown) that purifies fresh air and introduces the purified air into the intake passage 3, and an intercooler (not shown) that cools the air circulating in the intake passage 3.

In the intake passage 3, a throttle valve 6a for adjusting the amount of air or the amount of the air-fuel mixture to be delivered to the intake port 22 is provided as the excess air ratio adjustment device 6. The throttle valve 6a is controlled by the control unit 8. Specifically, the degree of opening of the throttle valve 6a is adjusted by the control unit 8. According to the thus adjusted degree of opening, the throttle valve 6a adjusts the amount of air or the amount of the air-fuel mixture to be delivered to the intake port 22. Thus, the throttle valve 6a functions as the excess air ratio adjustment device 6 that adjusts the excess air ratio of the air-fuel mixture to be supplied to the engine 2 by adjusting the amount of air to be supplied from the intake passage 3 to the engine 2.

The exhaust passage 4 has an exhaust temperature sensor 27 provided for detecting the exhaust temperature of the exhaust gas discharged from the engine 2 into the exhaust passage 4. The exhaust temperature sensor 27 transmits the detection result to the control unit 8. The exhaust passage 4 also has an oxygen concentration sensor 28 provided for detecting the oxygen concentration in the exhaust gas discharged from the engine 2 into the exhaust passage 4. The oxygen concentration sensor 28 transmits the detection result to the control unit 8.

The fuel supply device 5 is provided on the intake passage 3 and is controlled by the control unit 8 to supply fuel gas supplied from a fuel supply section 9 such as a pipeline to the intake passage 3. The air-fuel mixture, which contains air supplied upstream of the intake passage 3 and the fuel gas supplied from the fuel supply section 9, is supplied to the combustion chamber 12a through the intake port 22. The amount, the timing, and the like of fuel gas supply of the fuel supply device 5 is controlled by the control unit 8.

As shown in FIG. 1, the fuel supply device 5 employs a mixer method, and includes a fuel flow rate adjustment valve 5a for adjusting the flow rate of the fuel gas as a fuel control valve that controls the amount of fuel gas to be supplied to the intake passage 3 and a Venturi mixer 5b for mixing the fuel gas with the air circulating in the intake passage 3. Alternatively, as shown in FIG. 2, the fuel supply device 5 may employ an injection method and include an admission valve 5c for injecting the fuel gas toward the intake passage 3 as a fuel control valve, or include an injector or the like instead of the admission valve 5c as a fuel control valve.

The fuel control valve such as the fuel flow rate adjustment valve 5a or the admission valve 5c functions as the excess air ratio adjustment device 6 that adjusts the excess air ratio of the air-fuel mixture to be supplied to the engine 2 by adjusting the amount of fuel gas to be supplied to the intake passage 3.

The ignition device 7 is provided in the cylinder head 15 of each cylinder 12. The ignition device 7 includes, for example, a spark-ignition-type device using a spark plug. In the case of the spark-ignition-type ignition device 7, the timing, the period, and the like of energization for the spark plug are controlled by the control unit 8. Thus, an ignition parameter is controlled, such as ignition timing according to the energization timing or ignition energy according to the energization period.

Alternatively, the ignition device 7 may be a micro-pilot-type device that injects a small amount of liquid fuel. In this case, the ignition device 7 includes, for example, an injector that injects liquid fuel supplied from a liquid fuel tank (not shown) into the combustion chamber 12a (sub-chamber) under the cylinder head 15. In the case of the micro-pilot-type ignition device 7, the timing, the period, and the like of energization for the injector are controlled by the control unit 8. Thus, an ignition parameter is controlled, such as injection timing (ignition timing) according to the energization timing or fuel injection amount, i.e., ignition energy, according to the energization period.

The control unit 8 is a computer such as an Engine Control Unit (ECU) that controls operation of the engine 2, and includes, for example, a CPU, ROM, and RAM. The control unit 8 is configured to control various components of the engine 2. The control unit 8 may be configured to store therein various programs for controlling the engine 2, and control the engine 2 by reading and executing the programs.

As base control, the control unit 8 of the present embodiment controls the throttle valve 6a or the degree of opening of the fuel control valve such as the fuel flow rate adjustment valve 5a or the admission valve 5c in such a manner that an air-fuel mixture flow rate determined based on the engine load and the engine rotational speed is achieved.

In a situation in which the engine rotational speed, the engine load, or the excess air ratio changes due to a change in the composition of the fuel gas, for example, the throttle valve 6a or the degree of opening of the fuel control valve such as the fuel flow rate adjustment valve 5a or the admission valve 5c is corrected in such a manner that a target engine rotational speed, a target engine load, or a target excess air ratio is achieved based on the detection results from the rotational speed sensor 20 and the torque sensor 21, and the detection result from the oxygen concentration sensor 28 attached to the exhaust passage 4.

Furthermore, as combustion control for the engine 2, the control unit 8 controls the amount or percentage of nitrogen oxides in the exhaust gas in such a manner that the amount or percentage is reduced based on the excess air ratio of the air-fuel mixture supplied from the intake passage 3 to the engine 2 and the exhaust temperature of the exhaust gas discharged from the engine 2.

The following first describes the combustion control for the engine 2. In the engine device 1 that uses hydrogen-mixed fuel gas according to the present invention, the hydrogen mixing ratio in the fuel gas being supplied changes. Nitrogen oxides contained in the exhaust gas from the engine device 1 vary depending on the hydrogen mixing ratio in the fuel gas fed into the engine 2, and the rotational speed, the load, the excess air ratio, and the ignition timing of the engine 2.

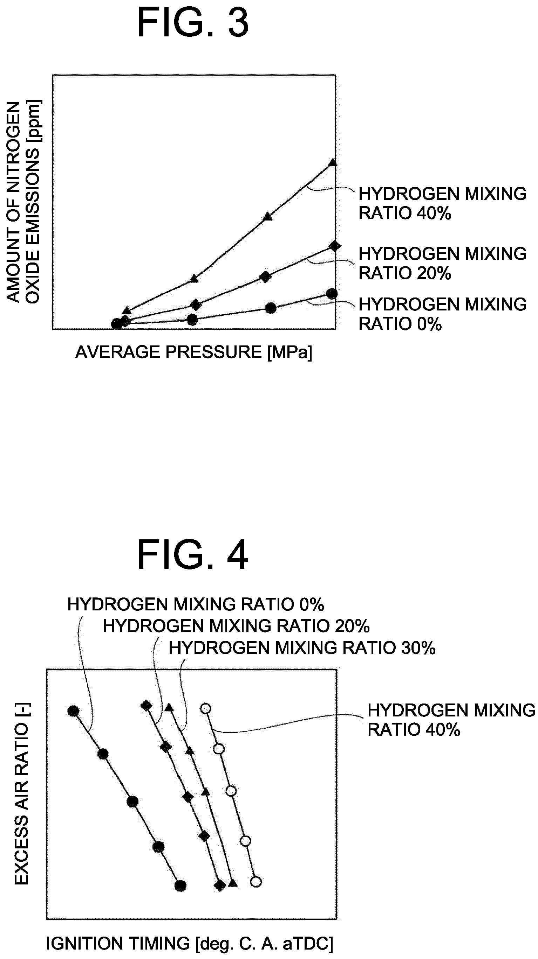

FIG. 3 shows correlations between the average pressure of combustion gas in the combustion chamber 12a and the amount of nitrogen oxide emissions respectively obtained for different hydrogen mixing ratios in the combustion gas in a case where the engine device 1 operates under the same operating conditions. The correlations indicate that the amount of nitrogen oxide emissions increases as the hydrogen mixing ratio in the combustion gas in the combustion chamber 12a increases. Note here that even if the hydrogen mixing ratio is constant, it is possible to reduce the amount of nitrogen oxide emissions (amount or percentage of nitrogen oxides) by retarding the ignition timing or by leaning out the combustion gas of the air-fuel mixture, which in other words is by increasing the excess air ratio.

FIG. 4 shows correlations between the ignition timing of the engine 2 and the excess air ratio of the air-fuel mixture supplied to the engine 2 respectively obtained for different hydrogen mixing ratios in the combustion gas in a case where the engine device 1 operates in such a manner that the predetermined target value of the amount of nitrogen oxide emissions is achieved. The correlations shown in FIG. 4 indicate that in the case where the engine device 1 operates in such a manner that the predetermined target value of the amount of nitrogen oxide emissions is achieved, the excess air ratio relative to the ignition timing (the ignition timing relative to the excess air ratio) varies depending on the hydrogen mixing ratio, whereas the tendency for the excess air ratio to decrease as the ignition timing is retarded, which follows a linear correlation characteristic, remains unchanged regardless of the hydrogen mixing ratio.

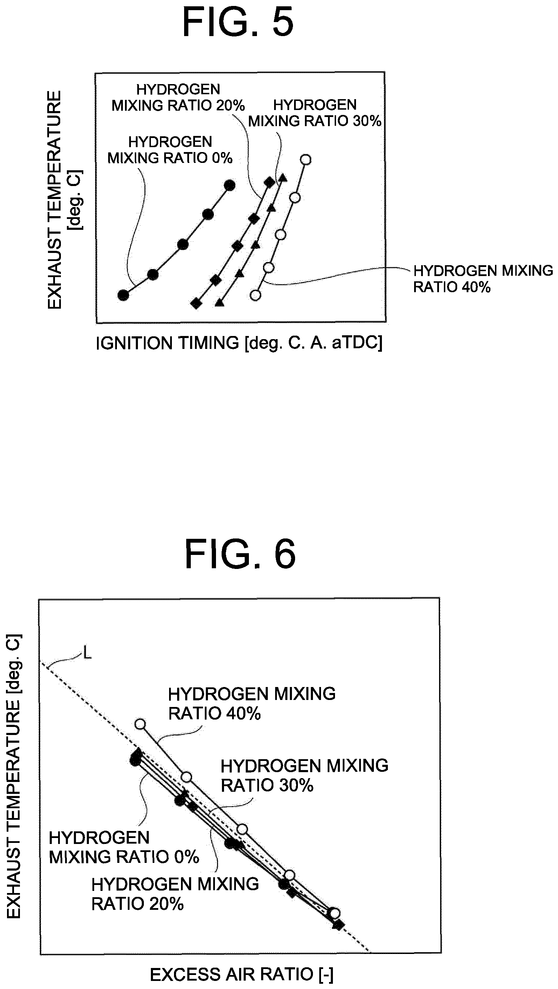

FIG. 5 shows correlations between the ignition timing of the engine 2 and the exhaust temperature of the exhaust gas from the engine 2 respectively obtained for different hydrogen mixing ratios in the combustion gas in a case where the engine device 1 operates in such a manner that the predetermined target value of the amount of nitrogen oxide emissions is achieved. The correlations shown in FIG. 5 indicate that in the case where the engine device 1 operates in such a manner that the predetermined target value of the amount of nitrogen oxide emissions is achieved, the exhaust temperature relative to the ignition timing (the ignition timing relative to the exhaust temperature) varies depending on the hydrogen mixing ratio, whereas the tendency for the exhaust temperature to increase as the ignition timing is retarded, which follows a linear correlation characteristic, remains unchanged regardless of the hydrogen mixing ratio.

Furthermore, based on the correlations shown in FIG. 4 and the correlations shown in FIG. 5, FIG. 6 shows correlations between the excess air ratio of the air-fuel mixture supplied to the engine 2 and the exhaust temperature of the exhaust gas from the engine 2 respectively obtained for different hydrogen mixing ratios in the combustion gas in a case where the engine device 1 operates in such a manner that the predetermined target value of the amount of nitrogen oxide emissions is achieved, and combustion is performed with different ignition timings. The correlations between the excess air ratio and the exhaust temperature shown in FIG. 6 indicate that in the case where the engine device 1 operates in such a manner that the predetermined target value of the amount of nitrogen oxide emissions is achieved, the exhaust temperature has a tendency to decrease as the excess air ratio increases, which follows a linear correlation characteristic, and this tendency remains substantially unchanged regardless of the hydrogen mixing ratio. **In** other words, the engine device 1 can achieve the predetermined target value of the amount of nitrogen oxide emissions as long as the excess air ratio and the exhaust temperature have a linear correlation such as shown in FIG. 6.

The engine device 1 therefore sets a target line L to be used during the operation of the engine device 1 based on the linear correlations between the excess air ratio and the exhaust temperature respectively obtained for the different hydrogen mixing ratios shown in FIG. 6. The engine device 1 stores such a target line as a map for each target value of the amount of nitrogen oxide emissions. Note that this correlation between the excess air ratio and the exhaust temperature may be a linear correlation having a certain width, allowing a certain range (width) of exhaust temperatures (or certain excess air ratios) with respect to a given excess air ratio (or a given exhaust temperature). That is, the target line L to be used during the operation of the engine device 1 may have a certain width.

Furthermore, the correlation between the excess air ratio and the exhaust temperature varies depending on an operating condition of the engine 2, such as the engine rotational speed and the engine load. The engine device 1 therefore stores a target line L to be used during the operation of the engine device 1 as a map for each operating condition of the engine device 1.

The engine device 1 fails to achieve the predetermined target value of the amount of nitrogen oxides in the exhaust gas when the excess air ratio and the exhaust temperature detected during the operation of the engine device 1 deviate from the correlation between the excess air ratio and the exhaust temperature described above.

In the engine device 1 according to the present embodiment, therefore, the control unit 8 controls, as the combustion control for the engine 2, each component so that the excess air ratio and the exhaust temperature maintain a desired correlation based on the excess air ratio of the fuel gas and the exhaust temperature of the exhaust gas during the operation of the engine device 1, as well as the engine rotational speed and the engine load of the engine 2.

Specifically, the control unit 8 reduces nitrogen oxides in the exhaust gas to meet the level specified by the emission regulations regardless of the hydrogen mixing ratio, or improves the fuel efficiency of the fuel gas to be supplied to the engine 2, by controlling the excess air ratio in the engine 2 and an ignition parameter (such as ignition timing or ignition energy) for ignition of the engine 2. The control unit 8 performs feedback control of the excess air ratio and the ignition parameter of the engine 2 so that the excess air ratio and the exhaust temperature detected during the operation satisfy the correlation between the excess air ratio and the exhaust temperature described above.

The engine device 1 can improve the fuel efficiency by advancing the ignition timing and/or enriching the fuel gas (decreasing the excess air ratio), regardless of the hydrogen mixing ratio. The engine device 1 can also reduce the amount of nitrogen oxide emissions by retarding the ignition timing and/or leaning out the fuel gas (increasing the excess air ratio), regardless of the hydrogen mixing ratio.

In the engine device 1 according to the present embodiment, correlation information, such as a relationship formula or a map representing a desired correlation between the excess air ratio and the exhaust temperature, is stored in the control unit 8. For example, the correlation between the excess air ratio and the exhaust temperature may be obtained from data detected during experimental operation of the engine device 1 to establish excess air ratio-exhaust temperature correlation information in advance. Alternatively, the correlation may be obtained from data detected during actual operation of the engine device 1 to establish excess air ratio-exhaust temperature correlation information in real time. Furthermore, in the engine device 1, the correlation information representing the correlation between the excess air ratio and the exhaust temperature is stored in the control unit 8 for each operating condition such as the engine rotational speed and the engine load of the engine 2 (for example, for each combination of the engine rotational speed and the engine load).

The engine device 1 also estimates the hydrogen mixing ratio based on the correlation between the ignition timing and the excess air ratio, and the ignition timing and the excess air ratio during the operation. The engine device 1 then calculates the amount of correction to the ignition timing and the excess air ratio based on the estimated hydrogen mixing ratio, and corrects the ignition timing and the excess air ratio based on the amount of correction calculated.

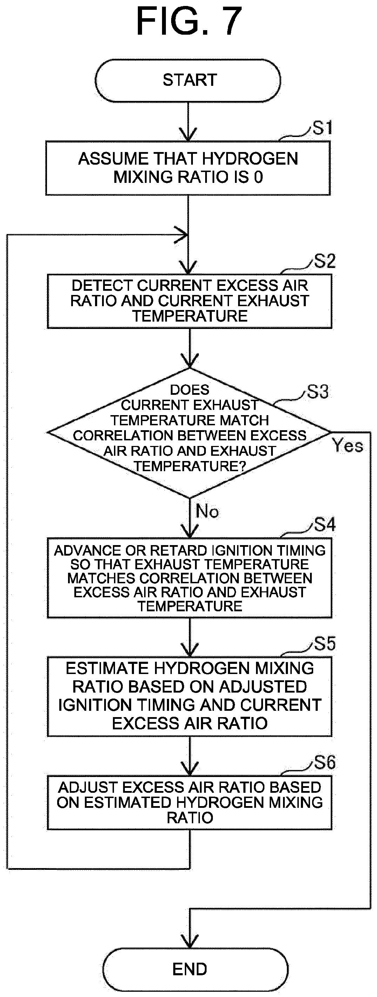

The following describes a specific example of the combustion control for the engine 2 by the control unit 8 with reference to a flowchart shown in FIG. 7.

First, the control unit 8 assumes that the hydrogen mixing ratio in the combustion gas that is supplied to the engine 2 is 0 (Step S1).

During the operation of the engine device 1, the control unit 8 detects the engine rotational speed of the engine 2 using the rotational speed sensor 20 and the engine load of the engine 2 using the torque sensor 21. Then, the control unit 8 reads, from the excess air ratio-exhaust temperature correlation information stored therein, excess air ratio-exhaust temperature correlation information corresponding to the detected engine rotational speed and the detected engine load of the engine 2.

During the operation of the engine device 1, the control unit 8 detects the oxygen concentration in the exhaust gas discharged from the engine 2 into the exhaust passage 4 using the oxygen concentration sensor 28 and calculates the excess air ratio of the fuel gas supplied from the intake passage 3 to the engine 2 based on the oxygen concentration. During the operation of the engine device 1, the control unit 8 also detects the exhaust temperature of the exhaust gas discharged from the engine 2 into the exhaust passage 4 using the exhaust temperature sensor 27 (Step S2).

Then, the control unit 8 compares the excess air ratio and the exhaust temperature (the current excess air ratio and the current exhaust temperature) with the read excess air ratio-exhaust temperature correlation information to determine whether or not the current excess air ratio and the current exhaust temperature match the excess air ratio-exhaust temperature correlation information (Step S3). For example, the control unit 8 determines whether or not the current excess air ratio and the current exhaust temperature are on the target line L for the excess air ratio and the exhaust temperature, such as shown as correlation information in FIG. 6.

If the current excess air ratio and the current exhaust temperature are on the target line L (Yes in Step S3), the control unit 8 terminates the flow without correcting the excess air ratio or any ignition parameter.

If the current excess air ratio and the current exhaust temperature are not on the target line L (No in Step S3), the control unit 8 corrects the excess air ratio or an ignition parameter so that the excess air ratio and the exhaust temperature are on the target line L. For example, the control unit 8 advances or retards the ignition timing (Step S4).

The control unit 8 also estimates the hydrogen mixing ratio based on the relationship between the ignition timing and the excess air ratio (Step S5). For example, the control unit 8 estimates the hydrogen mixing ratio corresponding to the corrected ignition timing and the current excess air ratio based on the relationships between the ignition timing and the excess air ratio respectively obtained for different hydrogen mixing ratios such as shown in FIG. 4. In this case, the control unit 8 may estimate the hydrogen mixing ratio by referring to a plotted line that is closest to a point corresponding to the corrected ignition timing and the current excess air ratio among the lines plotted for the respective hydrogen mixing ratios in FIG. 4.

Furthermore, the control unit 8 corrects the excess air ratio to an optimal level based on the estimated hydrogen mixing ratio (Step S6). For example, the control unit 8 corrects the excess air ratio to a level corresponding to the corrected ignition timing in a plotted line corresponding to the estimated hydrogen mixing ratio among the plotted lines in FIG. 4.

Thereafter, the control unit 8 returns to Step S2, and continues operation of the engine 2 using the corrected ignition timing and the corrected excess air ratio.

As described above, the engine device 1 according to the present embodiment is an engine device 1 that is driven by hydrogen-mixed fuel gas. The engine device 1 includes: an engine 2; and a control unit 8 that controls, based on an excess air ratio of an air-fuel mixture of air and the fuel gas supplied to the engine 2, and an exhaust temperature of exhaust gas from the engine 2, the excess air ratio and/or an ignition parameter of the engine 2 in such a manner that nitrogen oxides in the exhaust gas are reduced. For example, the control unit 8 controls the amount or percentage of nitrogen oxides in the exhaust gas.

Compared to an ordinary gas engine, the engine device 1 that involves combustion of hydrogen-mixed fuel gas needs to perform more adjustments such as leaning out the fuel gas (increasing the excess air ratio) and retarding the ignition timing (retardation) in order to reduce the amount of nitrogen oxide emissions. The amount of adjustment in the excess air ratio and the ignition timing varies depending on the hydrogen mixing ratio in the fuel gas, which is unknown and fluctuates. That is, expensive sensors are needed to measure the hydrogen mixing ratio in the fuel gas. However, the engine device 1 can reduce the amount of nitrogen oxide emissions to a predetermined target value regardless of the hydrogen mixing ratio in the fuel gas without the need for expensive sensors by adjusting the excess air ratio and the ignition timing in such a manner that the desired correlation between the excess air ratio and the exhaust temperature is maintained.

Furthermore, according to the present embodiment, the control unit 8 controls the excess air ratio and/or the ignition parameter in such a manner that nitrogen oxides in the exhaust gas are reduced based on the excess air ratio and the exhaust temperature, the ignition parameter, and the engine rotational speed and/or the engine load.

As such, even if the relationship between the excess air ratio and the exhaust temperature for reducing the amount of nitrogen oxide emissions varies from operating condition to operation condition, i.e., depending on the engine rotational speed and the engine load, the engine device 1 can use relationships between the excess air ratio and the exhaust temperature corresponding to various operating conditions.

Furthermore, according to the present embodiment, the control unit 8 stores in advance information representing a correlation between the excess air ratio and the exhaust temperature as excess air ratio-exhaust temperature correlation information for maintaining a certain amount of nitrogen oxides based on an operating condition corresponding to the engine rotational speed and/or the engine load, and controls the excess air ratio and/or the ignition parameter based on the excess air ratio-exhaust temperature correlation information.

As such, the engine device 1 has excess air ratio-exhaust temperature correlation information stored on a per-operating condition basis as maps or the like, and can reduce the amount of nitrogen oxide emissions to the predetermined target value by controlling the excess air ratio and the ignition parameter in such a manner that deviations in the actual measured values of the excess air ratio and the exhaust temperature are corrected based on the excess air ratio-exhaust temperature correlation information corresponding to the operating condition during the operation thereof.

Furthermore, according to the present embodiment, the control unit 8 estimates the hydrogen mixing ratio in the fuel gas based on the operating condition and the amount of correction to the excess air ratio and/or the ignition parameter.

As such, the engine device 1 can determine the hydrogen mixing ratio in the fuel gas without the need for expensive sensors for measuring the hydrogen mixing ratio. Besides, the engine device 1 can perform combustion control based on the estimated hydrogen mixing ratio.

Furthermore, in the engine device 1 according to the present embodiment, the engine 2 is a four-stroke engine, and includes an ignition device 7 that ignites the engine 2 by a spark ignition method or a micro-pilot method, a fuel supply device 5 that supplies the fuel gas to an intake side of the engine 2 by an injection method or a mixer method, and an excess air ratio adjustment device 6 that adjusts the excess air ratio using at least one of a fuel flow rate adjustment valve 5a or a throttle valve 6a based on the oxygen concentration in the exhaust gas.

In the engine device 1 described above, the control unit 8 adjusts the excess air ratio by controlling at least one of the degree of opening of the fuel flow rate adjustment valve 5a or the degree of opening of the throttle valve 6a.

As such, the engine device 1 can more accurately control the excess air ratio to satisfy the relationship between the excess air ratio and the exhaust temperature.

Furthermore, in the engine device 1 described above, the control unit 8 controls the ignition parameter by controlling the energization timing of a spark plug of the ignition device employing the spark ignition method.

As such, the engine device 1 can more accurately control the ignition parameter to satisfy the relationship between the excess air ratio and the exhaust temperature.

According to the present embodiment, the engine device 1 feeds, as the fuel gas, fuel containing hydrocarbons as main components into the engine 2.

As such, the engine device 1 can operate in such a manner that the amount of nitrogen oxide emissions meets a level specified by the emission regulations for fuel gas obtained by mixing hydrogen into fuel containing hydrocarbons as main components.

The engine device 1 according to the foregoing embodiment is described using an example in which the hydrogen mixing ratio is estimated based on the correlation between the ignition timing and the excess air ratio, and the ignition timing and the excess air ratio during operation, and the amount of correction to the ignition timing and the excess air ratio is calculated using the estimated value of the hydrogen mixing ratio. However, the present invention is not limited to this example.

In the engine device 1 according to an alternative embodiment, the control unit 8 determines whether the hydrogen mixing ratio in the fuel gas is on an increasing trend or a decreasing trend based on the excess air ratio-exhaust temperature correlation information. The control unit 8 then performs feedback control of the excess air ratio and the ignition timing by adjusting the excess air ratio and/or the ignition timing by a predetermined amount according to the result of the determination.

For example, the control unit 8 detects the current excess air ratio and the current exhaust temperature, and determines that the hydrogen mixing ratio is on an increasing trend if the exhaust temperature is lower than a target exhaust temperature, based on the excess air ratio-exhaust temperature correlation information, and the current hydrogen mixing ratio and/or the current exhaust temperature. If the exhaust temperature is higher than the target exhaust temperature, the control unit 8 determines that the hydrogen mixing ratio is on a decreasing trend.

Upon determining that the hydrogen mixing ratio is on an increasing trend, the control unit 8 performs at least one of the following: increasing the excess air ratio by a predetermined amount or retarding the ignition timing by a predetermined amount. Upon determining that the hydrogen mixing ratio is on a decreasing trend, the control unit 8 performs at least one of the following: decreasing the excess air ratio by a predetermined amount or advancing the ignition timing by a predetermined amount.

Thereafter, the control unit 8 detects the current excess air ratio and the current exhaust temperature again, and determines whether the hydrogen mixing ratio is on an increasing trend or a decreasing trend based on the excess air ratio-exhaust temperature correlation information. The control unit 8 terminates the feedback control of the excess air ratio and the ignition timing if the hydrogen mixing ratio is neither on an increasing trend nor a decreasing trend, and repeats the feedback control of the excess air ratio and the ignition timing by a predetermined amount if the hydrogen mixing ratio is on an increasing trend or a decreasing trend.

As described above, in the engine device 1 according to the alternative embodiment, the control unit 8 uses the ignition timing as the ignition parameter and performs at least one of the following upon determining that the hydrogen mixing ratio in the fuel gas is on an increasing trend based on the excess air ratio-exhaust temperature correlation information: increasing the excess air ratio or retarding the ignition timing.

In the engine device 1, the amount of nitrogen oxide emissions increases with an increase in the hydrogen mixing ratio. Regarding this matter, according to the alternative embodiment, the control unit 8 leans out the fuel gas (increases the excess air ratio) and/or retards the ignition timing in such a manner that the desired relationship between the excess air ratio and the exhaust temperature is maintained. Thus, the engine device 1 can reduce the amount of nitrogen oxide emissions to the target value while aiming to improve fuel efficiency.

In the engine device 1 according to the alternative embodiment, the control unit 8 uses the ignition timing as the ignition parameter and performs at least one of the following upon determining that the hydrogen mixing ratio in the fuel gas is on a decreasing trend based on the excess air ratio-exhaust temperature correlation information: decreasing the excess air ratio or advancing the ignition timing.

In the engine device 1, the amount of nitrogen oxide emissions decreases but the fuel efficiency declines with a decrease in the hydrogen mixing ratio. Regarding this matter, according to the alternative embodiment, the control unit 8 enriches the fuel gas (decreases the excess air ratio) and/or advancing the ignition timing in such a manner that the desired relationship between the excess air ratio and the exhaust temperature is maintained. Thus, the engine device 1 can both prevent an excessive fuel efficiency decline and reduce the amount of nitrogen oxide emissions to the target value.

The engine device 1 may be a gas engine that can be driven by feeding hydrogen-mixed fuel gas into the engine 2, or a dual-fuel engine that can be driven by feeding at least one of hydrogen-mixed fuel gas or liquid fuel, such as diesel oil or heavy oil, into the engine 2.

Note that the present invention can be modified as appropriate without departing from the gist or concept of the invention that can be read throughout the claims and the specification, and an engine device to which such modifications are made is also included in the technical concept of the present invention.

### APPENDICES

The following gives a summary of the invention extracted from the foregoing embodiments as appendices. Note that configurations and processing functions described in the appendices below may be selected, omitted, or combined as appropriate.

### Appendix 1

An engine device that is driven by hydrogen-mixed fuel gas, the engine device including:
an engine; and
a control unit that controls, based on an excess air ratio of an air-fuel mixture of air and the fuel gas supplied to the engine, and an exhaust temperature of exhaust gas from the engine, the excess air ratio and/or an ignition parameter of the engine.

### Appendix 2

The engine device according to Appendix 1, wherein the control unit controls an amount or percentage of nitrogen oxides in the exhaust gas.

### Appendix 3

The engine device according to Appendix 1, wherein the control unit controls the excess air ratio and/or the ignition parameter based on the excess air ratio and the exhaust temperature, the ignition parameter, and an engine rotational speed and/or an engine load.

### Appendix 4

The engine device according to Appendix 3, wherein the control unit stores in advance information representing a correlation between the excess air ratio and the exhaust temperature as excess air ratio-exhaust temperature correlation information for maintaining a certain amount of nitrogen oxides based on an operating condition corresponding to the engine rotational speed and/or the engine load, and controls the excess air ratio and/or the ignition parameter based on the excess air ratio-exhaust temperature correlation information.

### Appendix 5

The engine device according to Appendix 4, wherein the control unit estimates the hydrogen mixing ratio in the fuel gas based on the operating condition and an amount of correction to the excess air ratio and/or the ignition parameter.

### Appendix 6

The engine device according to any one of Appendix 1 to Appendix 5, wherein
the engine is a four-stroke engine, and includes
an ignition device that ignites the engine by a spark ignition method or a micro-pilot method,
a fuel supply device that supplies the fuel gas to an intake side of the engine by an injection method or a mixer method, and
an excess air ratio adjustment device that adjusts the excess air ratio using at least one of a fuel flow rate adjustment valve or a throttle valve based on an oxygen concentration in the exhaust gas.

### Appendix 7

The engine device according to Appendix 6, wherein the control unit adjusts the excess air ratio by controlling at least one of a degree of opening of the fuel flow rate adjustment valve or a degree of opening of the throttle valve.

### Appendix 8

The engine device according to Appendix 6 or 7, wherein the control unit controls the ignition parameter by controlling energization timing of a spark plug of the ignition device employing the spark ignition method.

### Appendix 9

The engine device according to any one of Appendix 1 to Appendix 8, wherein the engine device feeds, as the fuel gas, fuel containing hydrocarbons as main components into the engine.

### Appendix 10

The engine device according to any one of Appendix 1 to Appendix 9, wherein the control unit uses ignition timing as the ignition parameter, and performs at least one of the following upon determining that the hydrogen mixing ratio in the fuel gas is on an increasing trend based on the excess air ratio-exhaust temperature correlation information: increasing the excess air ratio or retarding the ignition timing.

### Appendix 11

The engine device according to any one of Appendix 1 to Appendix 10, wherein the control unit uses ignition timing as the ignition parameter, and performs at least one of the following upon determining that the hydrogen mixing ratio in the fuel gas is on a decreasing trend based on the excess air ratio-exhaust temperature correlation information: decreasing the excess air ratio or advancing the ignition timing.

### REFERENCE SIGNS LIST

1 Engine device
2 Engine
3 Intake passage
4 Exhaust passage
5 Fuel supply device
5a Fuel flow rate adjustment valve
5b Venturi mixer
5c Admission valve
6 Excess air ratio adjustment device
6a Throttle valve
7 Ignition device
8 Control unit
9 Fuel supply section
11 Cylinder block
12 Cylinder
12a Combustion chamber
13 Cylinder body
14 Piston
15 Cylinder head
18 Connecting rod
19 Crankshaft
20 Rotational speed sensor
21 Torque sensor
22 Intake port
23 Exhaust port
24 Intake valve
25 Exhaust valve
27 Exhaust temperature sensor
28 Oxygen concentration sensor

## Claims

1. An engine device that is driven by hydrogen-mixed fuel gas, the engine device comprising:
an engine; and
a control unit that controls, based on an excess air ratio of an air-fuel mixture of air and the fuel gas supplied to the engine, and an exhaust temperature of exhaust gas from the engine, the excess air ratio and/or an ignition parameter of the engine.

2. The engine device according to claim 1, wherein the control unit controls an amount or percentage of nitrogen oxides in the exhaust gas.

3. The engine device according to claim 1, wherein the control unit controls the excess air ratio and/or the ignition parameter based on the excess air ratio and the exhaust temperature, the ignition parameter, and an engine rotational speed and/or an engine load.

4. The engine device according to claim 3, wherein the control unit stores in advance information representing a correlation between the excess air ratio and the exhaust temperature as excess air ratio-exhaust temperature correlation information for maintaining a certain amount of nitrogen oxides based on an operating condition corresponding to the engine rotational speed and/or the engine load, and controls the excess air ratio and/or the ignition parameter based on the excess air ratio-exhaust temperature correlation information.

5. The engine device according to claim 4, wherein the control unit estimates the hydrogen mixing ratio in the fuel gas based on the operating condition and an amount of correction to the excess air ratio and/or the ignition parameter.

6. The engine device according to claim 1, wherein
the engine is a four-stroke engine, and includes
an ignition device that ignites the engine by a spark ignition method or a micro-pilot method,
a fuel supply device that supplies the fuel gas to an intake side of the engine by an injection method or a mixer method, and
an excess air ratio adjustment device that adjusts the excess air ratio using at least one of a fuel flow rate adjustment valve or a throttle valve based on an oxygen concentration in the exhaust gas.

7. The engine device according to claim 6, wherein the control unit adjusts the excess air ratio by controlling at least one of a degree of opening of the fuel flow rate adjustment valve or a degree of opening of the throttle valve.

8. The engine device according to claim 6, wherein the control unit controls the ignition parameter by controlling energization timing of a spark plug of the ignition device employing the spark ignition method.

9. The engine device according to claim 1, wherein the engine device feeds, as the fuel gas, fuel containing hydrocarbons as main components into the engine.

10. The engine device according to claim 4, wherein the control unit uses ignition timing as the ignition parameter, and performs at least one of the following upon determining that the hydrogen mixing ratio in the fuel gas is on an increasing trend based on the excess air ratio-exhaust temperature correlation information between the excess air ratio and the exhaust temperature: increasing the excess air ratio or retarding the ignition timing.

11. The engine device according to claim 4, wherein the control unit uses ignition timing as the ignition parameter, and performs at least one of the following upon determining that the hydrogen mixing ratio in the fuel gas is on a decreasing trend based on the excess air ratio-exhaust temperature correlation information: decreasing the excess air ratio or advancing the ignition timing.
